# EUROPEAN PATENT SPECIFICATION

(11) **EP 2 504 128 B1**
(45) Date of publication and mention of the grant of the patent: **08.11.2017**
(21) Application number: 10819307.9
(22) Date of filing: 21.09.2010
(51) Int. Cl.: B32B 33/00, B32B 27/18, B32B 27/20, B32B 27/30

(54) **SURFACE COVERING WITH WEAR LAYER HAVING DISPERSED WEAR RESISTANT PARTICLES AND METHOD OF MAKING THE SAME**
OBERFLÄCHENABDECKUNG MIT NUTZSCHICHT MIT DISPERGIERTEN VERSCHLEISSBESTÄNDIGEN PARTIKELN UND VERFAHREN ZU IHRER HERSTELLUNG
REVÊTEMENT DE SURFACE AVEC UNE COUCHE D'USURE AYANT DES PARTICULES DISPERSÉES RÉSISTANTES À L'USURE ET PROCÉDÉ DE FABRICATION ASSOCIÉ

(30) Priority: 24.09.2009 US 566118
(43) Date of publication of application: 03.10.2012
(73) Proprietor: Armstrong World Industries, Inc., Lancaster, PA 17604-3001 (US)
(72) Inventor: LAUSCH, Robert, C., Lititz, PA 17543 (US); HESS, Charles, D., Gordonsville, VA 22942 (US)
(74) Representative: Sloboshanin, Sergej
(86) International application number: PCT/US2010/049554
(87) International publication number: WO 2011/037872

(56) References cited:
- EP-A1- 0 853 095
- WO-A1-2008/103887
- GB-A- 1 376 706
- US-A- 4 614 680
- US-A1- 2001 028 945
- US-A1- 2008 206 583

## Description

The present invention relates to a surface covering with a wear layer having dispersed wear resistant particles and a method of making the same.

In order to improve wear, surface coverings are often provided with a topcoat on an outermost surface thereof. Conventional topcoats typically consist of radiation curable coatings, such as ultraviolet curable coatings. The radiation curable coatings are typically resin based mixtures of oligomers or monomers that are cured or cross-linked after being applied to the surface covering by radiation curing. The radiation curing polymerizes the resins to produce a high or low gloss coating having superior abrasion and chemical resistance properties. In order to further enhance the properties of the topcoat, the topcoat may also be provided with wear resistant particles, such as aluminum oxide, which are dispersed throughout the coating.

US patent application US 2008/0206583 A1 describes a floor covering comprising a backing layer, a decor layer and a wear layer.-A liquid composition is used and cured to form a solidified wear layer. EP 0 853 095 A1 describes a polymer formulation consisting of a polymer, filler material and abrasion-resistant additives. As abrasion-resistant additives α-alumina selected from tabular alumina, calcined unground alumina having a median crystallite size of at least 5.5µm, and calcined and ground alumina having a median particle size of at least 5.5µm is used.

WO 2008/103887 A1 describes in one embodiment a surface covering comprising a baking substrate comprising an olefin-based composition, a decor layer, and a radiation-cured top coating system including at least one wear layer. The wear layer may include abrasive particles with a particle size ranging from 20 to 200 microns.

Because the above-described topcoat is typically applied and cured after the surface covering has been fully constructed, the application and curing of the topcoat requires additional processing steps after the surface covering has been constructed. Additionally, curing the topcoat with UV lamps incurs extra cost. Further, the uniqueness of the chemistry of the topcoat, particularly when dispersed with the wear resistance particles, requires extra blending and curing steps. These additional steps can result in increased costs as well as increases in material loss due to extra handling of the surface covering. It is therefore desirable to develop a surface covering having an outermost surface with added abrasion and chemical resistance properties that can be easily constructed so that unnecessary processing steps can be eliminated and costs can be reduced.

The invention relates to a surface covering comprising a base layer and a wear layer. The wear layer is laminated to the base layer. The wear layer comprises a polymeric binder system having wear resistant particles dispersed therein and a polymeric resin. The wear resistant particles have a size of about 20-100 nanometers, preferably of about 20-40 nanometers and are dispersed at about 0.1-5 parts per hundred parts by weight of the polymeric resin, preferably at about 0.5-1.5 parts per hundred parts by weight of the polymeric resin.

The invention further relates to a method of making a surface covering comprising a base layer and a wear layer, comprising dispersing a plurality of wear resistant particles into a liquid to form a stable liquid dispersion; blending the stable liquid dispersion into a polymeric resin to form a mixture; extruding the mixture to form the wear layer; and laminating the wear layer to the base layer, wherein the wear resistant particles have a size of about 20-100 nanometers, preferably of about 20-40 nanometers and wherein the wear resistant particles are dispersed at about 0.1-5 parts per hundred parts by weight of the polymeric resin, preferably at about 0.5-1.5 parts per hundred parts by weight of the polymeric resin.

The invention will now be described in greater detail with reference to the following figures.
Figure 1 is a schematic illustration of a surface covering according to an embodiment of the invention.
Figure 2 is a schematic illustration of an alternate embodiment of the invention showing the surface covering with a topcoat,
Figure 3 is a schematic illustration of a further alternate embodiment of the invention showing the surface covering with a print layer having an ink pattern on a back surface thereof.
Figure 4 is a schematic illustration of a still further alternate embodiment of the invention showing the surface covering with a print layer having an ink pattern on a top surface thereof.

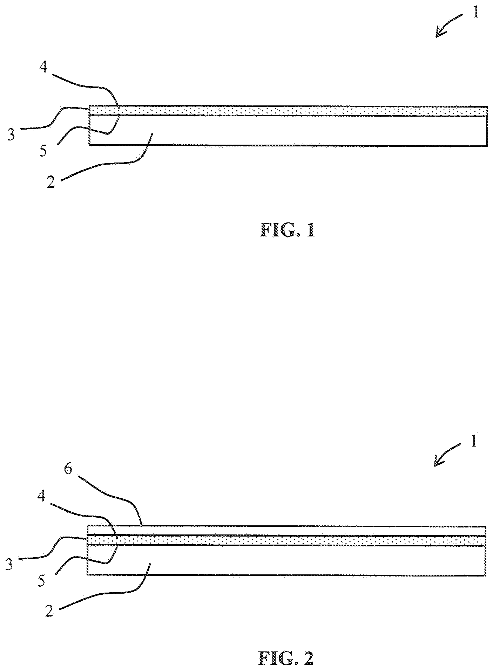

Figure 1 shows a surface covering 1 according to an embodiment of the invention. The surface covering 1 shown and described herein is a resilient surface covering, which may be provided, for example, in the form of a tile or a continuous sheet. As shown in Figure 1, the surface covering 1 comprises a base layer 2 and a wear layer 3. The wear layer 3 is provided with wear resistant particles 4 and is printed with an ink pattern 5 on a bottom surface thereof, it will be appreciated by those skilled in the art, however, that the surface covering 1 is not limited to the structure shown and described herein. For example, the surface covering 1 may comprise additional base layers, film layers, and/or a topcoat. Further, the thickness of the base layer 2 and the wear layer 3 may be varied depending on the desired characteristics of the surface covering 1.

In the embodiment shown and described herein, the base layer 2 has a thickness of about 0.889-4.318 mm (about 35-170 mils) and comprises a binder, a filler, and an optional pigment. The binder may be, for example, a polymeric resin, such as a vinyl resin, mixed with a plasticizer, stabilizer, and processing aids. The polymeric resin may include, for example, a homopolymer, copolymer, terpolymer or combinations thereof. The homopolymer may include, for example, polyvinyl chloride, polyvinyl acetate, polyvinyl propionate, polyvinyl butyrate, polymerized vinylidene chloride, polymerized acrylic acid, polymerized ethyl acrylate, polymerized methyl acrylate, polymerized propyl acrylate, polymerized butyl acrylate, polyethylene, polypropylene, or mixtures thereof. The copolymer may include, for example, polyvinyl chloride/polyvinyl acetate, vinylidene chloride/vinyl chloride, methyl methacrylate/vinyl chloride, methyl acrylate/ethyl acrylate, ethyl acrylate/butyl acrylate copolymer, ethylene propylene copolymers, ethylene styrene copolymers, or mixtures thereof. The terpolymers may include, for example, polyvinyl chloride/polyvinyl acetate/carbon monoxide, or polyvinyl chloride/polyvinyl acetate/acrylic polymer. Alternatively, the binder may be, for example, a thermoplastic polyester resin including at least one recyclable or renewable component.

The plasticizer may include, for example, ester type plasticizers, such as orthophthalates, non-orthopthalates, phosphates, benzoates, modified benzoates, tartrates, sebacates, adipates, citrates, hexanoates, soyates, trimellitates, sulfonates, rubbery plasticizers, such as butadiene-styrene copolymer, butadiene-acrylonitrile copolymer, or ethylene vinyl acetate, or other materials which function as plasticizers, such as epoxidized drying oils, aromatic hydrocarbon condensates and, chlorinated paraffin's. Where certain flexible soft vinyl resins are used, such as polymers containing large proportions of ethyl acrylate, no plasticizer may be needed. The stabilizer may include, for example, a mixed metal stabilizer, such as a calcium-zinc composition. The processing aids may include, for example, hydrocarbon resins, polystyrene resins, impact modifiers, flow modifiers, or fusion promoters, such as acrylic copolymers or polyethylene oxide.

The filler may include, for example, an inorganic or organic material, such as calcium carbonate, magnesium carbonate, silica, diatomaceous earth, dolomite, clay, or mixtures thereof. The filler may be a recyclable or renewable material. The optional pigment may include, for example, titanium dioxide, iron oxides, phthalocyanine blue, phthalocyanine green, azo red, benzidene yellow, carbon black, or mixtures thereof.

The formulation of the base layer 2 contains, for example, about 5-80% weight of the binder, preferably about 10-60% weight of the binder, and more preferably about 15-35% weight of the binder. Additionally, the base layer 2 contains, for example, about 20-95% weight of the filler, preferably about 40-90% weight of the filler, and more preferably about 65-85% weight of the filler.

The wear layer 3 is a film consisting of a polymer binder system dispersed with the wear resistant particles 4. The wear layer 3 has a thickness of about 0.025-1.016 mm (about 1-40 mils), preferably about 0.051-0.305 mm (about 2-12 mils), and more preferably about 0.051-0.102 mm (about 2-4 mils). The polymer binder system may comprise, for example, a polymeric resin mixed with an additive package and a plasticizer. In the preferred embodiment, the polymeric resin is a vinyl resin, such as polyvinyl chloride. Alternatively, the polymeric resin may be, for example, polyethyleneterephthalate (PET), glycolated polyethyleneterephthalate (PETG), polybutylene terephthalate (PBT), polypropylene terephthalate (PPT), or a thermoplastic ionomer resin, such as SURLYN from E. I. du Pont de Nemours and Company. The polymeric resin may also consist, for example, of recycled material, such as recycled polyethyleneterephthalate (PET) or polybutylene terephthalate (PBT) modified by renewable polyesters. The plasticizer may include, for example, unsaturated glycerides or phthalate esters.

For a polymer binder system comprising a vinyl resin, such as polyvinyl chloride, the additive package may include, for example, a stabilizer, a modifier, an acrylic processing aid, an internal and external lubricant package, an ultraviolet absorber, tint, other specialty additives, or any combination thereof. The stabilizer is present in the film, for example, at a level of about 0.7-3 parts per hundred parts by weight of the polymeric resin (phr) and may comprise for example, a thermal stabilizer, such as organo tin, calcium zinc, or other metallic salt. The modifier is present in the film, for example, at a level of about 4-15 parts per hundred parts by weight of the polymeric resin (phr) and may comprise, for example, an impact strength modifier, such as methylmethacrylate butadiene styrene (MBS), acrylonitrile butadiene styrene (ABS), or all-acrylic. The acrylic processing aid is present in the film, for example, at a level of about 1-3 parts per hundred parts by weight of the polymeric resin (phr). The internal and external lubricant package is present in the film, for example, at a level of about 0.2-1.5 parts per hundred parts by weight of the polymeric resin (phr) and may comprise, for example, glycerol monooleate, glycerides, or ester wax. The ultraviolet absorber is present in the film, for example, at a level of about 0-0.8 parts per hundred parts by weight of the polymeric resin (phr). The tint may include, for example, transparent or filled titanium dioxide opaque color tints or transparent clear tints.

In the preferred embodiment, the film is a rigid firm, and more preferably a rigid vinyl film. A rigid film is known in the art as a film that is free of or substantially free of plasticizers, e.g., comprising less than 5 parts of the plasticizer per hundred parts by weight of the polymeric resin (phr). It will be appreciated by those skilled in the art, however, that the film may alternatively be a semi-rigid film or a flexible film. A semi-rigid film is defined herein as a film comprising 5-10 parts of the plasticizer per hundred parts by weight of the polymeric resin (phr). A flexible film is defined herein as a film comprising greater than 10 parts of the plasticizer per hundred parts by weight of the polymeric resin (phr).

The wear resistant particles 4 dispersed in the polymer binder system of the film are aluminum oxide (Al₂O₃). It will be appreciated by those skilled in the art, however, that alternatively or in addition to aluminum oxide, other wear resistant particles may be used, such as crystalline classes of silicon carbide, hard plastics, reinforced polymers, nylon, organics, or any combination thereof. The wear resistant particles 4 are nano-sized and may be in the range, for example, of about 10-500 nanometers, preferably 20-100 nanometers, and more preferably about 20-40 nanometers. The wear resistant particles 4 are dispersed at a level of about 0.1-5 parts per hundred parts by weight of the polymeric resin (phr), and more preferably about 0.5-1.5 parts per hundred parts by weight of the polymeric resin (phr).

In order to make the wear layer 3, the wear resistant particles 4 are first dispersed in a compatible liquid to form a stable liquid dispersion. The liquid may be, for example, a liquid component of the polymer binder system, such as the plasticizer or a liquid component of the additive package. The stable liquid dispersion is then blended in the polymeric resin and any remaining components of the polymer binder system using a high speed mixer to a temperature of about 60-90 degrees Celsius to form a mixture. The mixture containing the polymer binder system and the wear resistant particles 4 is thermally compressed, fussed, and compounded and preferably extruded or continuously mixed to a temperature of about 160-200 degrees Celsius. The mixture is then preferably calendared to form the wear layer 3. For the wear layer 3, comprising the vinyl resin, the calendaring temperatures may range, for example, from about 190-225 degrees Celsius. Because the processes of blending, compounding, extruding, and calendaring a mixture to form a film is well known in the art, further description thereof has been omitted.

As shown in Figure 1, after formation of the wear layer 3, the wear layer 3 is printed with the ink pattern 5. In the embodiment shown and described herein, the wear layer 3 is provided with the ink pattern 5 on a back surface thereof. It will be appreciated by those skilled in the art, however, that the wear layer 3 may alternatively be clear or provided with an ink pattern on a top surface thereof in addition to or as an alternative to providing the ink pattern 5 on the back surface. The wear layer 3 may also optionally be mechanically and/or chemically embossed. The wear layer 3 is then laminated to the base layer 2. The wear layer 3 may be laminated to the base layer 2, for example, using a conventional standard stack press or a conventional rolling nip-type laminator.

Figure 2 shows an alternate embodiment of the invention. As shown in Figure 2, the wear layer 3 is provided with a topcoat 6. The topcoat 6 is coated in a liquid or flowable form onto the wear layer 3 at a thickness of about 1 mil and then cured. It is known to cure the topcoat 6 by controlled exposure to radiation, such as ultraviolet or electron beam radiation. The topcoat 6 may be, for example, a radiation curable coating, such as an acrylated urethane or acrylated polyester. Alternatively, the topcoat (not shown) may be a radiation curable biobased coating comprising a biobased component. The biobased component may be, for example, a biobased polyol, acrylated biobased polyol, or biobased resin derived, for example, from renewable and/or biobased materials, such as plant oils, polyester, polyester-ether, vegetable oils, corn, cellulose, starch, sugar, or sugar alcohols. The topcoat 6 provides additional resistance to marking and scuffing to the outermost surface of the surface covering 1.

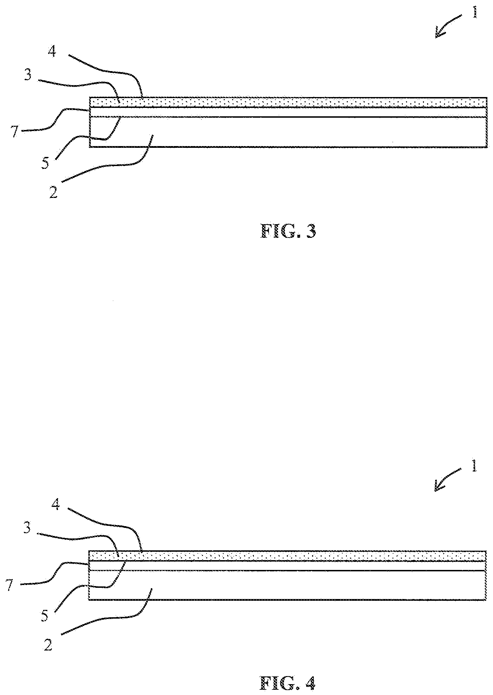

Figures 3-4 show a further alternate embodiment of the invention. As shown in Figures 3-4, the surface covering 1 may also be provided with a print layer 7. The print layer 7 may be, for example, a rigid film or semi-rigid film comprising, for example, a polymeric resin mixed with an additive package and a plasticizer. The polymer binder system may comprise, for example, a polymeric resin mixed with an additive package and a plasticizer. The polymeric resin may be, for example, a vinyl resin, such as polyvinyl chloride. Alternatively, the polymeric resin may be, for example, palyethyleneterephthalate (PET), glycolated polyethylerfeterephthalate (PETG), polybutylene terephthalate (PBT), polypropylene terephthalate (PPT), or a thermoplastic ionomer resin, such as SURLYN from E. I. du Pont de Nemours and Company. The polymeric resin may also consist, for example, of recycled material, such as recycled polyethyleneterephthalate (PET) or polybutylene terephthalate (PBT) modified by renewable polyesters. The plasticizer may include, for example, unsaturated glycerides or phthalate esters. The additive package may include, for example, a stabilizer, a modifier, an acrylic processing aid, an internal and external lubricant package, an ultraviolet absorber, tint, other specialty additives, or any combination thereof.

In Figures 3-4, the print layer 7 is printed with the ink pattern 5 instead of the wear layer 3. In Figure 3, the print layer 7 is provided with the ink pattern 5 on a back surface thereof. In Figure 4, the print layer 7 is provided with the ink pattern 5 on a top surface thereof. It will be appreciated by those skilled in the art, however, that the print layer 7 may alternatively be clear or provided on both the back surface and the top surface of the print layer 7. The print layer 7 may also optionally be mechanically and/or chemically embossed. Additionally or alternatively, the wear layer 3 could also be provided with a print layer on a back surface and/or top surface thereof and/or could be mechanically and/or chemically embossed. Because printing and mechanical and chemical embossing print layers are well known in the art, further description thereof has been omitted.

The print layer 7 is laminated to the base layer 2 between the base layer 2 and the wear layer 3. The print layer 7 is laminated to the base layer 2 between the base layer 2 and the wear layer 3, for example, using a conventional standard stack press or a conventional rolling nip-type laminator.

In the surface covering 1 according to the embodiments of the invention described herein, the wear layer 3, which forms the outmost surface of the surface covering 1, is dispersed with the wear resistant particles 4, which provides the wear layer 3 with added abrasion and chemical resistance properties. The surface covering 1 according to the invention thereby can be easily constructed to have an outermost surface with added abrasion and chemical resistance properties while eliminating unnecessary processing steps and reducing costs.

The foregoing illustrates some of the possibilities for practicing the invention. Many other embodiments are possible within the scope and spirit of the invention. For example, although the wear layer 3, is shown and described herein as being used in conjunction with the surface coverings 1, which are related to flooring surfaces, it will be appreciated by those skilled in the art that the wear layer could be used in conjunction with other types of surface coverings, such as wall paper, countertops, automobile structures, furniture surfaces, protective case surfaces, and the like, and still exhibit the same added abrasion and chemical resistance properties.

## Claims

1. A surface covering (1), comprising:
- a base layer (2); and
- a wear layer (3) laminated to the base layer (2), the wear layer (3) comprising a polymeric binder system having wear resistant particles (4) dispersed therein, wherein the wear resistant particles (4) have a particle size of about 20-100 nanometers, preferably of about 20-40 nanometers, and wherein the polymeric binder system comprises a polymeric resin and **characterised in that** the wear resistant particles (4) are dispersed at about 0.1-5 parts per hundred parts by weight of the polymeric resin, preferably at about 0.5-1.5 parts per hundred parts by weight of the polymeric resin.

2. The surface covering (1) of claim 1, wherein the wear layer (3) is one of a rigid film, a semi-rigid film, a flexible film or a vinyl film.

3. The surface covering (1) of claim 1, wherein the wear layer (3) is provided with an ink pattern (5).

4. The surface covering (1) of claim 1, wherein the wear resistant particles (4) are aluminum oxide.

5. The surface covering (1) of claim 1, further comprising a print layer (7) disposed between the wear layer (3) and the base layer (2), the print layer (7) being provided with an ink pattern (5).

6. The surface covering (1) of claim 1, further comprising a topcoat (6) provided on the wear layer (3).

7. The surface covering (1) of claim 1, wherein the polymeric binder system includes an additive package, and the additive package includes at least one of a stabilizer, a modifier, an acrylic processing aid, an internal and external lubricant package, an ultraviolet absorber, or a tint.

8. The surface covering (1) of claim 1, wherein the base layer (2) comprises a binder and a filler, the binder being a polymeric resin, and the base layer (2) containing about 65-85% weight of the filler.

9. A method of making a surface covering (1) comprising a base layer (2) and a wear layer (3), comprising:
- dispersing a plurality of wear resistant particles (4) into a liquid to form a stable liquid dispersion;
- blending the stable liquid dispersion into a polymeric resin to form a mixture;
- extruding the mixture to form the wear layer (3); and
- laminating the wear layer (3) to the base layer (2),
wherein the wear resistant particles (4) have a particle size of about 20-100 nanometers, preferably of about 20-40 nanometers, and wherein the wear resistant particles (4) are dispersed at about 0.1-5 parts per hundred parts by weight of the polymeric resin, preferably at about 0.5-1.5 parts per hundred parts by weight of the polymeric resin.

10. The method of claim 9, wherein the liquid is a plasticizer or a liquid component of an additive package.

11. The method of claim 9, further comprising calendaring the mixture to form the wear layer (3).

12. The method of claim 9, wherein the wear resistant particles (4) are aluminum oxide.

13. The method of claim 9, wherein the wear layer (3) has a thickness ranging from about 0.025 mm to 1.016 mm (about 1 to 40 mils).

## Patentansprüche

1. Oberflächenabdeckung (1), umfassend:
- eine Basisschicht (2); und
- eine Verschleißschicht (3), die an die Basisschicht (2) laminiert ist, wobei die Verschleißschicht (3) ein Polymerbindemittelsystem umfasst, das darin dispergierte verschleißfeste Partikel (4) aufweist, wobei die verschleißfesten Partikel (4) eine Partikelgröße von etwa 20-100 Nanometer, vorzugsweise von etwa 20-40 Nanometer, aufweisen, und wobei das Polymerbindemittelsystem ein Polymerharz umfasst, und
**dadurch gekennzeichnet, dass**
die verschleißfesten Partikel (4) mit etwa 0,1-5 Teilen pro hundert Gewichtsteile des Polymerharzes, vorzugsweise mit etwa 0,5-1,5 Teilen pro hundert Gewichtsteile des Polymerharzes, dispergiert sind.

2. Oberflächenabdeckung (1) nach Anspruch 1, wobei die Verschleißschicht (3) ein steifer Film, ein halbsteifer Film, ein flexibler Film oder ein Vinylfilm ist.

3. Oberflächenabdeckung (1) nach Anspruch 1, wobei die Verschleißschicht (3) mit einem Tintenmuster (5) versehen ist.

4. Oberflächenabdeckung (1) nach Anspruch 1, wobei die verschleißfesten Partikel (4) Aluminiumoxid sind.

5. Oberflächenabdeckung (1) nach Anspruch 1, ferner umfassend eine Druckschicht (7), die zwischen der Verschleißschicht (3) und der Basisschicht (2) angeordnet ist, wobei die Druckschicht (7) mit einem Tintenmuster (5) versehen ist.

6. Oberflächenabdeckung (1) nach Anspruch 1, ferner umfassend einen Topcoat (6), der auf der Verschleißschicht (3) vorgesehen ist.

7. Oberflächenabdeckung (1) nach Anspruch 1, wobei das Polymerbindemittelsystem ein Additiv-Paket umfasst, und das Additiv-Paket einen Stabilisator, einen Modifikator, einen Acrylverarbeitungshilfsstoff, ein internes und externes Schmiermittel-Paket, einen Ultraviolett-Absorber und/oder ein Tönungsmittel umfasst.

8. Oberflächenabdeckung (1) nach Anspruch 1, wobei die Basisschicht (2) ein Bindemittel und einen Füllstoff umfasst, wobei das Bindemittel ein Polymerharz ist, und die Basisschicht (2) etwa 65-85 % Gewicht des Füllstoffs enthält.

9. Verfahren zur Herstellung einer Oberflächenabdeckung (1) umfassend eine Basisschicht (2) und eine Verschleißschicht (3), die umfasst:
- Dispergieren einer Vielzahl von verschleißfesten Partikeln (4) in einer Flüssigkeit zum Bilden einer stabilen flüssigen Dispersion;
- Mischen der stabilen flüssigen Dispersion in ein Polymerharz zum Bilden eines Gemisches;
- Extrudieren des Gemisches zum Bilden der Verschleißschicht (3); und
- Laminieren der Verschleißschicht (3) an die Basisschicht (2),
wobei die verschleißfesten Partikel (4) eine Partikelgröße von etwa 20-100 Nanometer, vorzugsweise von etwa 20-40 Nanometer, aufweisen, und wobei die verschleißfesten Partikel (4) mit etwa 0,1-5 Teilen pro hundert Gewichtsteile des Polymerharzes, vorzugsweise mit etwa 0,5-1,5 Teilen pro hundert Gewichtsteile des Polymerharzes, dispergiert sind.

10. Verfahren nach Anspruch 9, wobei die Flüssigkeit ein Plastiziermittel oder eine flüssige Komponente eines Additiv-Pakets ist.

11. Verfahren nach Anspruch 9, ferner umfassend Kalandrieren des Gemisches zum Bilden der Verschleißschicht (3).

12. Verfahren nach Anspruch 9, wobei die verschleißfesten Partikel (4) Aluminiumoxid sind.

13. Verfahren nach Anspruch 9, wobei die Verschleißschicht (3) eine Dicke aufweist, die von etwa 0,025 mm bis 1,016 mm (etwa 1 bis 40 mils) reicht.

## Revendications

1. Revêtement de surface (1) comprenant :
- une couche de base (2) ; et
- une couche d'usure (3) superposée à la couche de base (2), la couche d'usure (3) comprenant un système de liant polymère dans lequel sont dispersées des particules (4) résistant à l'usure, dans lequel les particules (4) résistant à l'usure possèdent une granulométrie d'environ 20 à 100 nm, de préférence d'environ 20 à 40 nm, et dans lequel le système de liant polymère comprend une résine polymère ; et **caractérisé en ce que** les particules (4) résistant à l'usure sont dispersées à concurrence d'environ 0,1 à 5 parties par 100 parties en poids de la résine polymère, de préférence à concurrence d'environ 0,5 à 1,5 partie par 100 parties en poids de la résine polymère.

2. Revêtement de surface (1) selon la revendication 1, dans lequel la couche d'usure (3) représente un film choisi parmi un film rigide, un film semi-rigide, un film flexible ou un film de vinyle.

3. Revêtement de surface (1) selon la revendication 1, dans lequel la couche d'usure (3) est munie d'un motif à base d'encre (5).

4. Revêtement de surface (1) selon la revendication 1, dans lequel les particules (4) résistant à l'usure sont en oxyde d'aluminium.

5. Revêtement de surface (1) selon la revendication 1, comprenant en outre une couche d'impression (7) disposée entre la couche d'usure (3) et la couche de base (2), la couche d'impression (7) étant munie d'un motif à base d'encre (5).

6. Revêtement de surface (1) selon la revendication 1, comprenant en outre une couche supérieure (6) prévue sur la couche d'usure (3).

7. Revêtement de surface (1) selon la revendication 1, dans lequel le système de liant polymère englobe un ensemble d'additifs et l'ensemble d'additifs englobe au moins un élément choisi parmi un stabilisateur, un modificateur, un adjuvant de traitement acrylique, un ensemble de lubrifiants interne et externe, un absorbeur de l'ultraviolet ou une teinte.

8. Revêtement de surface (1) selon la revendication 1, dans lequel la couche de base (2) comprend un liant et une matière de charge, le liant étant une résine polymère et la couche de base (2) contenant d'environ 65 à 85 % en poids de la matière de charge.

9. Procédé de fabrication d'un revêtement de surface (1) comprenant une couche de base (2) et une couche d'usure (3), comprenant le fait de :
- disperser un certain nombre de particules (4) résistant à l'usure dans un liquide pour obtenir une dispersion liquide stable ;
- introduire par mélange la dispersion liquide stable dans une résine polymère afin d'obtenir un mélange ;
- extruder le mélange pour obtenir la couche d'usure (3) ; et
- superposer la couche d'usure (3) à la couche de base (2) ;
dans lequel les particules (4) résistant à l'usure possèdent une granulométrie d'environ 20 à 100 nm, de préférence d'environ 20 à 40 nm, et dans lequel les particules (4) résistant à l'usure sont dispersées à concurrence d'environ 0,1 à 5 parties par 100 parties en poids de la résine polymère, de préférence à concurrence d'environ 0,5 à 1,5 partie par 100 parties en poids de la résine polymère.

10. Procédé selon la revendication 9, dans lequel le liquide est un plastifiant ou un composant liquide d'un ensemble d'additifs.

11. Procédé selon la revendication 9, comprenant en outre le calandrage du mélange pour obtenir la couche d'usure (3).

12. Procédé selon la revendication 9, dans lequel les particules (4) résistant à l'usure sont en oxyde d'aluminium.

13. Procédé selon la revendication 9, dans lequel la couche d'usure (3) possède une épaisseur qui se situe dans la plage d'environ 0,025 mm à 1,016 mm (d'environ 1 à 40 mils).
